# EUROPÄISCHE PATENTANMELDUNG

(11) **EP 0 875 527 A2**
(43) Veröffentlichungstag der Anmeldung: **04.11.1998**
(21) Anmeldenummer: 98106459.5
(22) Anmeldetag: 08.04.1998
(51) Int. Cl.: C08J 11/22, C08G 18/42

(54) **Verfahren zur Herstellung von Polyesterpolyolen unter Nutzung von Terephthalatabfallprodukten sowie ihr Einsatz für die Herstellung von PUR-Schäumen**

(30) Priorität: 28.04.1997 DE 19717964
(71) Anmelder: Buna Sow Leuna Olefinverbund GmbH, 06258 Schkopau (DE)
(72) Erfinder: Marschner, Horst, 06122 Halle (DE); Schiller, Klaus, 06124 Halle (DE); Decker, Ursula, 06122 Halle (DE)

(57) **Zusammenfassung**

Bei der Herstellung von Polyesterpolyolen mit Abfällen aus Polyethylen- oder Polybutylenterephthalat werden große Mengen an Umesterungs- und Veresterungskatalysatoren eingesetzt. Dadurch wird der Verarbeitungsprozeß mit Diisocyanaten zu PUR-Schaumstoffen ungünstig beeinflußt. Bei der Verwendung von mit Titandioxid pigmentierten Abfällen aus der Terephthalatproduktion und nachfolgender Umesterung und Veresterung mit PSA und Diglykolen werden keine zusätzlichen Katalysatoren verwendet. Das solvatisierte Titandioxid begünstigt den Umesterungs- und Veresterungsprozeß in Gegenwart von niederen Alkanolen und setzt sich nicht am Boden ab, wenn die Viskosität des Finalproduktes über 2000 mPas liegt.

## Beschreibung

Die vorliegende Erfindung betrifft ein Verfahren zur Herstellung von Polyesterpolyolen auf der Basis von Phthalsäureanhydrid, mehrwertigen Diglykolen sowie Abfällen von Polyethylen- oder Polybutylenterephthalaten sowie ihren Einsatz bei der Herstellung von PUR-Schaumstoffen.

Polyesterpolyole werden durch Umsetzung mit Diisocyanaten für die Herstellung von Polyurethan-Schaumstoffen unterschiedlicher Dichte, Elastomeren, Klebstoffen und Versiegelungsmassen eingesetzt. Vorrangig erfolgt die Verarbeitung von Polyesterpolyolen im Klebstoffsektor und im PUR-Schaumbereich.

Polyesterpolyole auf der Basis von aromatischen Dicarbonsäuren erhöhen die chemische Wärmestabilität und verbessern die Flammwidrigkeit der Finalprodukte und besonders die von PUR-Schäumen, die mit brennbaren Kohlenwasserstoffen produziert werden.

Als Verschäumungsmittel im PUR-Schaumbereich werden Kohlenwasserstoffe wie Pentane, Freone oder Kohlendioxid verwendet. Die Verwendung von Freonen ist stark rückläufig oder darf für bestimmte Einsatzgebiete überhaupt nicht mehr verwendet werden. (Kunststoffe 85 (1996) 12 S. 2146-2148; Kunststoffe 86 (1996) 2, S. 230-235). Im Trend zeichnet sich die Verwendung von Kohlendioxid in Kombination mit Wasser für die Herstellung von PUR-Schaumstoffen ab. Die Zuführung des Kohlendioxids kann direkt zum reagierenden System erfolgen oder wird durch die Bildung des Blähmittels während der Reaktion erzeugt. (Kunststoffe 81 (1991) 7, S. 622-625; Kunststoffe 84 (1994) 6, S. 763-764).

Die Herstellung der Polyesterpolyole kann nach unterschiedlichen Verfahren erfolgen. Das einheitliche Verfahrensprinzip besteht darin, in einer sehr kurzen Reaktionszeit das entstehende Reaktionswasser aus dem Reaktionssystem zu entfernen und das Gleichgewicht fast vollständig auf die Seite des herzustellenden Finalproduktes zu verschieben. Zur Verkürzung der Reaktionszeit werden metallhaltige Katalysatoren auf der Basis von Titan oder Zinn eingesetzt, die in der Polymerschmelze löslich sind und nicht aus dem Reaktionsgemisch abgetrennt werden müssen. Die zu veresternden Rohstoffe werden in den Veresterungsreaktor eingetragen und durch Zuführung von Wärme auf 200 - 240 °C erhitzt. Bei Normaldruck wird durch das reagierende System ein Inertgas, z.B. erwärmter Stickstoff oder Kohlendioxid durchgeleitet, um das entstehende Wasser leichter aus dem Reaktor zu entfernen. Bei einer erreichten Säurezahl von ca. 30 mg KOH/g kann die Stickstoffzufuhr unterbrochen werden und es wird Vakuum auf den Veresterungskessel angelegt, weil damit eine schnellere Entfernung des Reaktionswassers erzielt werden kann. Mit den restlichen Wassermengen werden gleichzeitig die überschüssigen Dialkohole aus dem System entfernt. Durch die Bestimmung der Säurezahl, der Hydroxylzahl und der Viskosität wird der Prozeß verfolgt und die Endwerte des Finalproduktes festgelegt.

Zur Erhöhung der Aromatenkonzentration im Polyesteralkohol und zur Wiederverwertung von Produkten, die aus Polyethylen- oder Polybutylenterephthalat bestehen werden diese Abfallrohstoffe bei der Herstellung von Polyesterpolyolen eingesetzt. Die Verarbeitung der Abfälle kann in einem separaten Hydrolyseverfahren mit Diglykolen erfolgen. Das Hydrolysat wird in einem weiteren Reaktionsschritt mit Phthalsäureanhydrid und weiteren Dialkoholen verestert. Die direkte Hydrolyse von Terephthalatabfällen und sofortiger Veresterung von Phthalsäureanhydrid mit Überschußalkoholen in einem einzigen Reaktionsschritt führt ebenfalls zu Polyesteralkoholen(US 4.542.239; CA 4.929.749; CA 5.101.064).

Bei der Herstellung der Polyesteralkohole mit Abfällen von Polyethylen- oder Polybutylenterephthalaten werden in relativ großen Mengen Umesterungs- und Veresterungskatalysatoren eingesetzt. (US 4.469.823, US 4.542.239, US 5.395.858, US 4.468.483). Da diese Katalysatoren im Endprodukt verbleiben, bewirken sie im Verarbeitungsprozeß mit Diisocyanaten eine sehr heftig verlaufende Reaktion. Bei der Verwendung von Di-Alkoholkonzentrationen im Verhältnis von 1:1 zum hydrolysierten Polymeren treten nach der Hydrolysereaktion Absetzerscheinungen von Farbpigmenten im hydrolysierten Produkt auf, die keine reproduzierbare Produktqualität garantieren. Das Produkt neigt sehr leicht zur Gelierung durch die Farbpigmente.
Durch Umsetzung von Polyolen mit Diiscyanaten in Gegenwart von Katalysatoren lassen sich die unterschiedlichsten PUR-Systeme herstellen.
Das Katalysatorsystem setzt sich in der Regel aus zwei Komponenten zusammen: Die erste Komponente besteht meistens aus einem tertiären Amin und katalysiert die Reaktion von Wasser mit dem Isocyanat. Die zweite Komponente besteht meistens aus einer metallorganischen Verbindung, bevorzugt werden zinnorganische Verbindungen. Sie wirken beschleunigend auf die Isocyanatumsetzungen, insbesondere die Umsetzung der Polyesterpolyole oder Polyetherpolyole mit den Isocyanaten.

Aufgabe der Erfindung ist die Gewährleistung einer gleichzeitig ablaufenden Hydrolyse- und Veresterungsreaktion von Polyethylen- oder Polybutylenterephthalaten in Gegenwart von Phthalsäureanhydrid und weiteren Dialkoholen. Der gewonnene Polyesteralkohol darf keine Absetzerscheinungen bei der Lagerung zeigen und muß sich in einer gleichmäßigen Reaktion mit Diisocyanaten umsetzen lassen.

Die Umsetzung von Phthalsäureanhydrid mit mehrwertigen Diglykolen wie Monoethylenglykol, Diethylenglykol, Tri- und Tetraethylenglykolen, sowie deren undestillierten Gemischen, Polyethylenglykolen, Butandiol 1.3. oder Butandiol 1.4, Hexandiol 1.6., Glycerinderivaten, Propylenglykol, Dipropylenglykol, Tri- und Tetrapropylenglykolen, Polypropylenglykolen, Pentaerythritderivaten, Trimethylolpropan, Zucker- oder Stärkeprodukten, Neopentylglykol sowie von Flaschen- und Faserabfällen von Polyethylen- oder Polybutylenterephthalaten erfolgt erfindungsgemäß mit Titandioxid pigmontierten Faserstoffen ohne zusätzlichen Umesterungskatalysator.

Überraschend wurde festgestellt, daß bei der Verwendung von mit Titandioxid pigmentierten Faserstoffen kein zusätzlicher Umesterungskatalysator der Reaktion zugeführt werden muß, wenn die Umesterung und die gleichzeitig ablaufende Veresterung bei einer Temperatur von über 200 °C in Gegenwart von niedermolekularen Alkoholen, wie Isopropanol, Isobutanol oder Isopentanol, in einer Konzentration von 0,01-0,1 Masse-% , vorzugsweise 0,03 bis 0,06 Gew.-% und Phthalsäureanhydrid durchgeführt wird. Unter diesen Bedingungen wird das Titandioxid so aktiviert, daß dadurch die Umesterung und Veresterung der Reaktionskomponenten erreicht werden kann. Das als Pigment eingesetzte Titandioxid aus den Fasermaterialien setzt sich nach der Reaktion nicht am Boden ab und verbleibt im Reaktionsgemisch fein verteilt, wenn die Dichte des Endproduktes im Bereich der solvatisierten Metallverbindungen liegt und die Viskosität über 2000 mPas/20 °C eingestellt wird. Die nach diesem Verfahrensprinzip hergestellten Polyesterpolyole lassen sich uneingeschränkt mit Diisocyanaten umsetzen und es können PUR-Schaumstoffe mit unterschiedlichen Dichten gewonnen werden.
Überraschend wurde auch festgestellt, daß bei der Herstellung von PUR-Schäumen, die aus Polyesteralkoholen, welche aus PET-Recyclaten und Diolen, insbesondere Diethylenglykol, hergestellt wurden, keine zusätzlichen Katalysatoren benötigt werden. Offensichtlich kam es bei der Herstellung des Polyesteralkoholes zu einer Aktivierung des Titandioxides, welches sich katalysierend auf die Verschäumungsreaktion auswirkt. Der Katalysatorzusatz bei der Herstellung der Formulierung konnte um bis zu 100 % gesenkt werden, weil sonst die Verschäumungsreaktion und die Aushärtungszeiten, charakterisiert durch die Steigzeit (End of Rise Time) und Klebfreizeit (Tack Free Time) zu schnell erfolgen würde und sich negativ auf die Qualität des Schaumes auswirkt.

Die Erfindung soll an folgenden Beispielen erläutert werden:

### Beispiel 1 (Vergleichsbeispiel):

100 g pigmentiertes PET-Fasermaterial und 80 g Diethylenglykol wurden in einen Veresterungskolben, der mit einer Kolonne ausgerüstet ist, eingetragen und auf 150 °C erwärmt. Bei dieser Temperatur erfolgte unter Rühren die Zugabe von 125 g geschuppten PSA und nochmals 120 g Diethylenglykol. Nach dieser Zugabe wurden 0,1 ml Isopropyltitanat zum Reaktionsgemisch zudosiert und die Reaktionskomponenten auf 210 °C erwärmt. Das sich bildende Reaktionswasser wird mit einem Stickstoffstrom aus dem Reaktionsgemisch entfernt. Nach 8 Stunden war die Um- und Veresterungsreaktion beendet. Die Säurezahl lag unter den geforderten 1 mg KOH/g und die Viskosität betrug 690 mPas. Nach ca. 2 Tagen wurde ein Absetzen von milchigem Produkt festgestellt. Das Verschäumen mit einem Diisocyanat führte zu einem ungleichmäßigen PUR-Schaumstoff.

### Beispiel 2:

125 g pigmentierte PET-Stapelfaser und 200 g Diethylenglykol wurden in einen Reaktionskolben eingetragen, der mit einer Kolonne ausgerüstet ist. Unter Rühren wurden 186 g geschupptes PSA zum Reaktionsgemisch zugegeben und die Mischung auf 220 °C erwärmt. Mit Hilfe von durchgeleitetem Stickstoff wird das sich bildende Reaktionswasser entfernt. Nach 7 Stunden war die Reaktion beendet. Die Säurezahl lag bei 0,9 mg KOH/g und einer Viskosität von 4500 mPas/20 °C. Nach einer Lagerzeit von 20 Tagen wurde kein Absetzen von Produkt beobachtet. Die Verarbeitung zu PUR-Schaumstoffen mit unterschiedlichen Dichten erfolgte ohne Beanstandungen.

### Beispiel 3:

140 g pigmenthaltige PET-Faser und 125 g undestilliertes Sumpfprodukt, welches Diethylenglykol, Monoethylenglykol, Tri- und Tetraethylenglykol enthält, werden in einen Veresterungskolben eingetragen, der mit Rührer und Kolonne ausgerüstet ist. Die Reaktionskomponenten werden auf 150 °C erwärmt und unter Rühren erfolgt die Zugabe von 195 g geschupptem PSA. Die Rohstoffmischung wird auf 215 °C erwärmt und das entstehende Reaktionswasser mit durchgeleitetem Stickstoff abgetrieben. Nach 7 Stunden war die Reaktion mit der erreichten Säurezahl von 0,9 mg KOH/g beendet. Die Viskosität betrug 8700 mPas/20 °C. Das Produkt ist unbegrenzt lagerfähig und kann zu PUR-Schaumstoffen mit unterschiedlicher Dichte verarbeitet werden.

### Beispiel 4:

125 g pigmenthaltiges, granuliertes PBT und 110 g Diethylenglykol werden in einen Veresterungskolben gegeben, der mit Rührer und Kolonne ausgerüstet ist. Die Reaktionspartner werden auf 150 °C erwärmt und unter Rühren erfolgt die Zugabe von 165 g geschupptem PSA. Diese Mischung wird auf 210 °C erhitzt und das entstehende Reaktionswasser mit einem Vakuum von 20 Torr abgezogen. Nach 6 Stunden war die Reaktion beendet. Die Säurezahl betrug 1,2 mg KOH/g und die Viskosität wurde mit dem Haake-Viskosimeter bei 7200 mPas/20 °C gemessen. Das Produkt wurde bei 30 °C ohne Absetzerscheinungen gelagert. Die Verarbeitung zu PUR-Schaumstoffen mit unterschiedlicher Dichte zeigte ein normales Verhalten.

### Beispiel 5:

30g pigmentierte PET-Faser und 120 g granulierte PET-Flaschenabfälle werden zusammen mit 115 g Diethylenglykol in einen Veresterungskolben eingetragen, der mit einem Rührer und einer Kolonne ausgestattet ist. Die eingesetzten Rohstoffe werden auf 150 °C erwärmt und unter Zugabe von 80 g geschupptem PSA wird die Reaktion unter Abdestillieren des entstehenden Reaktionswassers fortgeführt. Diese Mischung wird auf 220 °C erhitzt und unter einem Vakuum von 25 Torr wird das gesamte Reaktionswasser abgezogen. Nach ca. 5 Stunden ist die Reaktion bei einer Säurezahl von 1,0 mg KOH/g beendet. Die Viskosität des fertigen Polyesterpolyols betrug 5600 mPas. Das Produkt kann ohne Absetzerscheinungen in Fässern gelagert werden. Aus diesem Produkt kann durch Umsetzung mit Diisocyanaten ein sehr fester PUR-Schaum gewonnen werden, der durch eine Dichte von 35 g/cm³ charakterisiert ist.

### Beispiel 6: Verschäumung Polyesterpolyol-MDI (Methylendiphenyldiisocyanat) Polyesterpolyol, verestert auf der Basis von Phthalsäureanhydrid und Diethylenglykol und umgeestertem PET-Faser-Abfall, der Titandioxid als Pigment enthält und Diethylenglykol. Phthalsäureanhydrid: PET = 80 : 20 Ma.-% MDI, : Funktionalität 2,8 und NCO-Gehalt: 31,1 Masseprozent Polyesterpolyol P1: OH-Zahl = 573 mg KOH/g, Säurezahl: < 2 mg KOH/g

| | Typ | Einheit | Versuch 1 | Versuch 2 |
|---|---|---|---|---|
| Polyesterpolyol | P1 | g | 94,5 | 94,7 |
| Wasser | | g | 3,75 | 3,75 |
| Katalysator | DABCO | g | 0,15 | 0,05 |
| Aktivator | 201 | g | 0,10 | 0,00 |
| Schaumstabilisator | | g | 1,5 | 1,5 |
| Summe | | g | 100 | 100 |
| Diisocyanat | MDI | | | |
| Isocyanatindex | | | 105 | 105 |
| Cup Time | | s | 175 | 195 |
| Tack of Rise Time | | s | 185 | 205 |
| Tack Free Time | | s | 195 | 215 |
| Dichte | | kg/m³ | 60 | 60 |
| Erläuterungen: DABCO: 1,4-Diaza-bicyclo-(2,2,2)-oktan Aktivator 201: Di-butyl-zinndilaurat | | | | |

### Beispiel 7: Verschäumung Polyesterpolyol-MDI (Methylendiphenyldiisocyanat) Polyesterpolyol, hergestellt durch Umesterung auf der Basis von mit Titandioxid versetztem PET-Abfall und Diethylenglykol. MDI: Funktionalität 2,8, NCO-Gehalt: 31,1 Masseprozent Polyesterpolyol P2: OH-Zahl = 470 mg KOH/g, Säurezahl < 2mg KOH/g

| | Typ | Einheit | 1 | 2 |
|---|---|---|---|---|
| Polyesterpolyol | P2 | g | 92,5 | 92,75 |
| Wasser | | g | 5,75 | 5,75 |
| Katalysator | DABCO | g | 0,15 | 0,00 |
| Aktivator | 201 | g | 0,10 | 0,00 |
| Schaumstabilisator | | G | 1,5 | 1,5 |
| Summe | | g | 100 | 100 |
| Diisocyanat | MDI | | | |
| Isocyanatindex | | | 105 | 105 |
| Cup Time | | s | 65 | 160 |
| Tack of Rise Time | | s | 75 | 210 |
| Tack Free Time | | s | 85 | 250 |
| Dichte | | kg/m³ | 43 | 48 |

## Patentansprüche

1. Verfahren zur Herstellung von Polyesterpolyolen auf der Basis von Phthalsäureanhydrid, mehrwertigen Dialkoholen sowie von Faserabfällen von Polyethylen- oder Polybutylenterephthalaten, gegebenenfalls in Kombination mit Abfällen aus Polyethylenterephthalat-Getränkeflaschen, dadurch gekennzeichnet, daß bei der Verwendung von mit Titandioxid pigmentierten Faserstoffen kein zusätzlicher Umesterungskatalysator der Reaktion zugeführt wird, die Umesterung und die gleichzeitig ablaufende Veresterung bei einer Temperatur von 200 bis 250 °C durchgeführt wird, zu Beginn der Umesterung niedermolekulare Alkohole in einer Konzentration von 0,01-0,1 Gew.-% und Phthalsäureanhydrid zugeführt werden, die Dichte des Endproduktes im Bereich der solvatisierten Metallverbindungen liegt und die Viskosität des Endproduktes über 2000 mPas/20 °C eingestellt wird und daß die gewonnenen Polyesterpolyole direkt mit Diisocyanaten ohne Zusatz von Katalysatoren zu PUR-Schäumen verarbeitet werden.

2. Verfahren nach Anspruch 1, dadurch gekennzeichnet, daß als niedere Alkohole Isopropanole, Isobutanole und/oder Isopentanole in einer Konzentration von 0,03 bis 0,06 Gew.-% eingesetzt werden.
